# EUROPEAN PATENT SPECIFICATION

(11) **EP 3 257 888 B1**
(45) Date of publication and mention of the grant of the patent: **04.09.2019**
(21) Application number: 16749466.5
(22) Date of filing: 11.02.2016
(51) Int. Cl.: C08G 73/10, C08L 79/08, C08J 5/18

(54) **POLYAMIC ACID, POLYIMIDE RESIN AND POLYIMIDE FILM**
POLYAMINSÄURE, POLYIMIDHARZ UND POLYIMIDFILM
ACIDE POLYAMIQUE, RÉSINE DE POLYIMIDE ET FILM DE POLYIMIDE

(30) Priority: 11.02.2015 KR 20150020954
(43) Date of publication of application: 20.12.2017
(73) Proprietor: Kolon Industries, Inc., Seoul 07793 (KR)
(72) Inventor: YANG, Jong Won, Yongin-si Gyeonggi-do 446-797 (KR); JUNG, Hak Gee, Yongin-si Gyeonggi-do 446-797 (KR)
(74) Representative: Ter Meer Steinmeister & Partner
(86) International application number: PCT/KR2016/001378
(87) International publication number: WO 2016/129926

(56) References cited:
- WO-A1-97/44704
- JP-B2- 3 994 185
- KR-A- 20110 042 831
- KR-A- 20120 078 512
- KR-A- 20140 107 116
- KR-A- 20150 007 335

## Description

### Technical Field

The present invention relates to polyamic acid, and a polyimide resin and a colorless transparent polyimide film, prepared therefrom.

### Background Art

A polyimide (PI) film is generally formed from a polyimide resin. Here, "polyimide resin" refers to a highly heat-resistant resin prepared by subjecting an aromatic dianhydride and an aromatic diamine or an aromatic diisocyanate to solution polymerization, thus preparing a polyamic acid derivative, which is then subjected to a ring-closing reaction and dehydration at high temperature so as to be imidized. In the preparation of the polyimide resin, examples of the aromatic dianhydride may include pyromellitic dianhydride (PMDA), biphenyltetracarboxylic dianhydride (BPDA), etc., and examples of the aromatic diamine may include oxydianiline (ODA), p-phenylenediamine (p-PDA), m-phenylenediamine (m-PDA), methylenedianiline (MDA), bisaminophenylhexafluoropropane (HFDA), etc.

Since a polyimide resin is a very highly heat-resistant resin, which is insoluble and infusible, and is superior in terms of thermal oxidation resistance, heat resistance, radiation resistance, low-temperature characteristics, chemical resistance and the like, it has been utilized in a variety of fields including those of advanced heat-resistant materials, such as automotive materials, aircraft materials, spacecraft materials, etc., and electronic materials such as insulation coating materials, insulating films, semiconductors, electrode protecting films for TFT-LCDs, etc. Recently, such a resin is employed for display materials such as optical fibers or liquid crystal alignment layers, and is also used for transparent electrode films, either in a manner in which it is contained along with a conductive filler in the films or in a manner in which it is applied on the surface thereof.

However, a polyimide film is brown- or yellow-colored, attributable to its high aromatic ring density, and thus has low transmittance in the visible light range. Additionally, it takes on a yellowish color, which decreases light transmittance or increases birefringence, making it difficult to utilize it for optical members. With the goal of overcoming such problems, attempts have been made to purify monomers and solvents to high purity before polymerization, but to date the improvements in transmittance have not been significant.

US Patent No. 5053480 discloses use of an aliphatic cyclic dianhydride component in lieu of aromatic dianhydride. Although the prepared solution or film is improved in transparency and color compared to the purification method, limitations are imposed on the increase in transmittance, and thus high transmittance cannot be satisfied, and moreover, deteriorated thermal and mechanical properties may result. In particular, a polyimide film, in which yellowing problems are alleviated, has low Tg (glass transition temperature) and is thus difficult to use in fields requiring high temperatures of 300°C or more.

Furthermore, US Patent Nos. 4595548, 4603061, 4645824, 4895972, 5218083, 5093453, 5218077, 5367046, 5338826, 5986036 and 6232428 and Korean Patent Application Publication No. 2003-0009437 disclose the preparation of a novel polyimide having improved transmittance and color transparency in the range within which thermal properties are not significantly deteriorated using a connector such as -O-, -SO₂-, CH₂-, etc., a monomer having a bent structure connected to an m-position rather than a p-position, or an aromatic dianhydride and aromatic diamine monomers having a substituent such as -CF₃, etc. However, the mechanical properties, yellowness and visible light transmittance of the above polyimide are insufficient for use in insulating films for semiconductors, insulating films for TFT-LCDs, electrode protecting films, and substrate layers for flexible displays.

### Disclosure

### Technical Problem

Accordingly, the present invention is intended to provide a polyimide film, which has improved yellowness and optical isotropy while retaining the superior properties of conventional polyimide films, and also to provide a polyamic acid and a polyimide resin, which is an imidized product thereof, suitable for use in producing the polyimide film.

### Technical Solution

A preferred first embodiment of the present invention provides a polyamic acid, which is a polymerized product of a diamine and a dianhydride, wherein the diamine includes 9,9-bis(3-fluoro-4-aminophenyl)fluorene (FFDA), and the dianhydride includes 2-bis(3,4-dicarboxyphenyl)hexafluoropropane dianhydride (6FDA) and 3,3',4,4'-biphenyltetracarboxylic dianhydride (BPDA).

In the first embodiment, the 2-bis(3,4-dicarboxyphenyl)hexafluoropropane dianhydride (6FDA) may be contained in a molar fraction ranging from 0.4 to less than 1.0 based on a total molar amount of the dianhydride.

Respective second and third embodiments of the present invention provide a polyimide resin and a polyimide film, comprising: a first block, represented by Chemical Formula 1 below and formed by polymerizing 9,9-bis(3-fluoro-4-aminophenyl)fluorene (FFDA) and 2-bis(3,4-dicarboxyphenyl)hexafluoropropane dianhydride (6FDA); and a second block, represented by Chemical Formula 2 below and formed by polymerizing 9,9-bis(3-fluoro-4-aminophenyl)fluorene (FFDA) and 3,3',4,4'-biphenyltetracarboxylic dianhydride (BPDA): 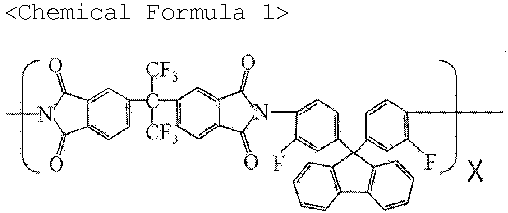 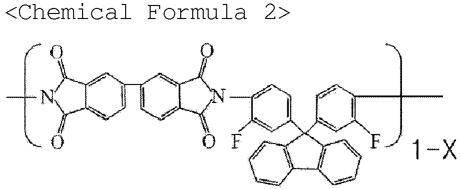 in Chemical Formulas 1 and 2, X is a molar fraction in a range of 0.4 < X < 1.0.

The polyimide resin and film may have a coefficient of linear thermal expansion (CTE) of 60 ppm/°C or less, measured two times at 50 to 250°C using a TMA method. In particular, the polyimide film may have a yellow index of 2.0 or less at a film thickness of 10 to 20 **µ**m, an average light transmittance of 88% or more at 550 nm, and a birefringence (Δn) of 0.01 or less, the birefringence being defined by TE (Transverse Electric) - TM (Transverse Magnetic).

A preferred fourth embodiment of the present invention provides an image display device, comprising the polyimide film according to the third embodiment.

### Advantageous Effects

According to the present invention, the polyimide resin or film can be effectively used for a protective layer or a substrate for a flexible display because it has excellent mechanical properties and high heat resistance, and particularly, is colorless and transparent, with high optical isotropy.

### Best Mode

According to the present invention, in order to impart a polyimide film with high thermal stability and thermal expansion, especially superior optical properties and optical isotropy, when manufactured into a protective layer or a substrate for an image display device, a dianhydride-based monomer and a diamine-based monomer having a fluorene backbone are polymerized. More specifically, as a polymerized product of diamine and dianhydride, polyamic acid may be provided, in which the diamine includes 9,9-bis(3-fluoro-4-aminophenyl)fluorene (FFDA), and the dianhydride includes 2-bis(3,4-dicarboxyphenyl)hexafluoropropane dianhydride (6FDA) and 3,3',4,4'-biphenyltetracarboxylic dianhydride (BPDA).

As such, 2-bis(3,4-dicarboxyphenyl)hexafluoropropane dianhydride (6FDA) is contained in a molar fraction of 0.4 to less than 1.0, and preferably 0.6 to 0.9, based on the total molar amount of the dianhydride, and the remainder comprises 3,3',4,4'-biphenyltetracarboxylic dianhydride (BPDA), and dianhydrides other than 6FDA and BPDA, or only 3,3',4,4'-biphenyltetracarboxylic dianhydride (BPDA) may be contained as the remainder.

If the molar fraction of 6FDA is less than 0.4, the relative molar fraction of BPDA increases, and thus the film prepared from the polyamic acid through the subsequent film-forming process may be assuredly imparted with heat resistance, but the birefringence thereof cannot be significantly improved.

In the present invention, the dianhydride and the diamine are polymerized at an equivalent ratio of 1:1 at a reaction temperature of -10 to 80°C for a reaction time of 2 to 48 hr in a nitrogen or argon atmosphere, thus preparing polyamic acid.

The solvent (polymerization solvent) for use in polymerizing the dianhydride and the diamine is not particularly limited so long as it dissolves polyamic acid. Known reaction solvents may include at least one polar solvent selected from among m-cresol, N-methyl-2-pyrrolidone (NMP), dimethylformamide (DMF), dimethylacetamide (DMAc), dimethylsulfoxide (DMSO), acetone, and diethyl acetate. In addition thereto, a low-boiling-point solution such as tetrahydrofuran (THF) or chloroform or a low absorbable solvent such as **γ**-butyrolactone may be utilized.

The amount of the solvent is not particularly limited, but the amount of the polymerization solvent (first solvent) is preferably 50 to 95 wt%, and more preferably 70 to 90 wt%, based on the total amount of the polyamic acid solution, in order to obtain appropriate molecular weight and viscosity of the polyamic acid solution.

According to the present invention, polyamic acid resulting from polymerizing the monomers may be imidized using any process appropriately selected from among known imidization processes, examples of which include thermal imidization, chemical imidization, or a combination of thermal imidization and chemical imidization.

Specifically, chemical imidization is performed by adding polyamic acid with a dehydrating agent including an acid anhydride such as acetic anhydride, etc., and an imidization catalyst including a tertiary amine such as isoquinoline, **β**-picoline, pyridine, etc., and thermal imidization is carried out by heating polyamic acid for 1 to 8 hr while gradually raising the temperature thereof in the temperature range of 40 to 300°C. Also, chemical imidization may be conducted in combination with thermal imidization, and the heating conditions may vary depending on the kind of polyamic acid solution, the thickness of the resulting polyimide film, etc.

In an embodiment of the present invention, the polyamide-imide film is manufactured using a combination of thermal imidization and chemical imidization. More specifically, the polyamic acid solution is added with a dehydrating agent and an imidization catalyst, cast on a support, heated at 80 to 200°C, and preferably 100 to 180°C, to activate the dehydrating agent and the imidization catalyst, partially cured and dried, and then heated at 200 to 400°C for 5 to 400 sec, thereby obtaining a polyimide film.

Alternatively, in the present invention, a polyimide film may be manufactured as follows. Specifically, the polyamic acid solution is imidized, after which the imidized solution is added to the second solvent, precipitated, filtered and dried, thus obtaining a polyimide resin solid, which is then dissolved in the first solvent to prepare a polyimide solution, following by a film-forming process, resulting in a polyimide film.

The first solvent may be the same as the solvent used upon polymerization of the polyamic acid solution, and the second solvent may be a solvent having lower polarity than the first solvent to attain the polyamic acid resin solid. Specific examples of the second solvent may include at least one selected from among water, alcohols, ethers, and ketones. The amount of the second solvent is not particularly limited, and is preferably 5 to 20 times the weight of the polyamic acid solution.

The film, which is applied on the support, is gelled on the support using dry air and through thermal treatment. The gelling of the applied film is preferably carried out at a temperature of 100 to 250°C, and the support is exemplified by a glass plate, aluminum foil, a stainless conveyor belt, and a stainless drum. The processing time required for gelling may vary depending on the temperature, kind of support, amount of applied polyamic acid solution, and mixing conditions of the catalyst, and is not limited to a certain time but preferably falls in the range of 5 to 30 min.

The gelled film is separated from the support, thermally treated and dried, thus completing the imidization thereof. As such, thermal treatment is preferably performed in the temperature range of 100 to 500°C for 1 to 30 min. After thermal treatment, the obtained film is further thermally treated under predetermined tension to remove residual stress from the film. As thermal hysteresis and residual stress are relieved, more stable thermal properties may result. In particular, in the case where final thermal treatment is not conducted, thermal expansion may be decreased due to the presence of residual stress, which has a tendency to shrink the film, and thus the coefficient of thermal expansion may be remarkably lowered. Since tension and temperature are correlated with each other, the tension may vary depending on the temperature, but the temperature is preferably set in the range from 300 to 500°C, and the thermal treatment time is preferably set in the range from 1 min to 3 hr. After thermal treatment, the film has remaining volatile components of 5% or less, and preferably 3% or less.

Thereby, the thickness of the polyimide film is not particularly limited, but preferably falls in the range from 10 to 250 **µ**m and more preferably from 10 to 100 **µ**m.

The polyimide resin or film according to the present invention preferably includes a first block, represented by Chemical Formula 1 below and formed by polymerizing 9,9-bis(3-fluoro-4-aminophenyl)fluorene (FFDA) and 2-bis(3,4-dicarboxyphenyl)hexafluoropropane dianhydride (6FDA), and a second block, represented by Chemical Formula 2 below and formed by polymerizing 9,9-bis(3-fluoro-4-aminophenyl)fluorene (FFDA) and 3,3',4,4'-biphenyltetracarboxylic dianhydride (BPDA).

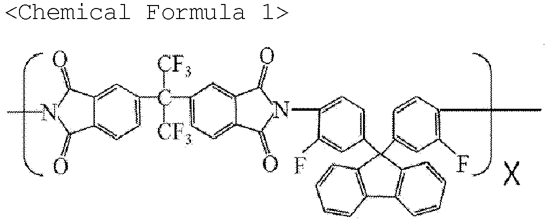

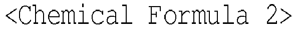

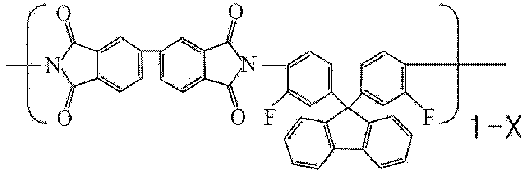

In Chemical Formulas 1 and 2, X designates a molar fraction in the range of 0.4 < X < 1.0. In order to assure superior optical properties and optical isotropy, the molar fraction of Chemical Formula 1 more preferably falls in the range of 0.5 < X < 0.8, based on the total mol. If the molar fraction of Chemical Formula 2 is 0.6 or more, the heat resistance of the film may be ensured, but the birefringence of the film cannot be improved.

In the present invention, the polyimide resin and film may have a coefficient of linear thermal expansion (CTE) of 60 ppm/°C or less, measured two times at 50 to 250°C using a thermomechanical analysis method (TMA-method). Particularly, the film may have a yellow index of 2.0 or less at a film thickness of 10 to 20 **µ**m, an average light transmittance of 88% or more at 550 nm, and a birefringence (Δn) of 0.01 or less, the birefringence being defined by TE (Transverse Electric) - TM (Transverse Magnetic), and is thus suitable for use in a protective layer or a substrate for a display.

### Mode for Invention

Therefore, when the polyimide film of the invention is applied to a substrate for an image display device such as a flexible display, a colorless transparent substrate having superior mechanical properties, high heat resistance and low birefringence can result.

### Examples

A better understanding of the present invention may be obtained through the following examples which are set forth to illustrate, but are not to be construed to limit the present invention.

### Example 1

While a 500 ml reactor equipped with a stirrer, a nitrogen injector, a dropping funnel, a temperature controller and a condenser was purged with nitrogen, 384.316 g of dimethylacetamide (DMAc) was placed in the reactor, and 49.972 g (0.13 mol) of FFDA was then dissolved therein. Thereafter, 15.299 g (0.052 mol) of BPDA was added, the reaction was carried out for 5 hr, and 34.652 g (0.078 mol) of 6FDA was added. The resulting solution was maintained at room temperature and then reacted for 18 hr, thus obtaining a polyamic acid solution having a solid content of 20 wt% and a viscosity (the viscosity value being measured two times using a Brookfield viscometer (RVDV-II+P) at 25°C using a #6 or #7 spindle at 50 rpm and then averaged) of 150 poise. After termination of the reaction, the obtained solution was applied on a stainless plate, cast to a thickness of 10 to 20 **µ**m, dried using hot air at 80°C for 20 min, 120°C for 20 min, and 300°C for 10 min, slowly cooled, and separated from the plate, thereby manufacturing a polyimide film having a thickness (measured using Anritsu Electronic Micrometer, error range: ±0.5% or less) of 12 **µ**m.

### Example 2

While a 500 ml reactor equipped with a stirrer, a nitrogen injector, a dropping funnel, a temperature controller and a condenser was purged with nitrogen, 407.493 g of dimethylacetamide (DMAc) was placed in the reactor, and 49.972 g (0.13 mol) of FFDA was then dissolved therein. Thereafter, 11.475 g (0.039 mol) of BPDA was added, the reaction was carried out for 5 hr, and 40.427 g (0.091 mol) of 6FDA was added. The resulting solution was maintained at room temperature and then reacted for 18 hr, thus obtaining a polyamic acid solution having a solid content of 20 wt% and a viscosity of 127 poise. The subsequent procedures were performed in the same manner as in Example 1, thereby manufacturing a polyimide film having a thickness of 10 **µ**m.

### Example 3

While a 500 ml reactor equipped with a stirrer, a nitrogen injector, a dropping funnel, a temperature controller and a condenser was purged with nitrogen, 384.349 g of dimethylacetamide (DMAc) was placed in the reactor, and 46.128 g (0.12 mol) of FFDA was then dissolved therein. Thereafter, 7.061 g (0.024 mol) of BPDA was added, the reaction was carried out for 5 hr, and 42.648 g (0.096 mol) of 6FDA was added. The resulting solution was maintained at room temperature and then reacted for 18 hr, thus obtaining a polyamic acid solution having a solid content of 20 wt% and a viscosity of 112 poise. The subsequent procedures were performed in the same manner as in Example 1, thereby manufacturing a polyimide film having a thickness of 12 **µ**m.

### Example 4

While a 500 ml reactor equipped with a stirrer, a nitrogen injector, a dropping funnel, a temperature controller and a condenser was purged with nitrogen, 390.551 g of dimethylacetamide (DMAc) was placed in the reactor, and 46.128 g (0.12 mol) of FFDA was then dissolved therein. Thereafter, 3.531 g (0.012 mol) of BPDA was added, the reaction was carried out for 5 hr, and 47.979 g (0.108 mol) of 6FDA was added. The resulting solution was maintained at room temperature and then reacted for 18 hr, thus obtaining a polyamic acid solution having a solid content of 20 wt% and a viscosity of 172 poise. The subsequent procedures were performed in the same manner as in Example 1, thereby manufacturing a polyimide film having a thickness of 15 **µ**m.

### Comparative Example 1

While a 500 ml reactor equipped with a stirrer, a nitrogen injector, a dropping funnel, a temperature controller and a condenser was purged with nitrogen, 380.027 g of dimethylacetamide (DMAc) was placed in the reactor, and 53.816 g (0.14 mol) of FFDA was then dissolved therein. Thereafter, 41.191 g (0.14 mol) of BPDA was added, and the resulting solution was maintained at room temperature and then reacted for 18 hr, thus obtaining a polyamic acid solution having a solid content of 20 wt% and a viscosity of 112 poise. The subsequent procedures were performed in the same manner as in Example 1, thereby manufacturing a polyimide film having a thickness of 12 **µ**m.

### Comparative Example 2

While a 500 ml reactor equipped with a stirrer, a nitrogen injector, a dropping funnel, a temperature controller and a condenser was purged with nitrogen, 397.752 g of dimethylacetamide (DMAc) was placed in the reactor, and 46.128 g (0.12 mol) of FFDA was then dissolved therein. Thereafter, 53.310 g (0.12 mol) of 6FDA was added, and the resulting solution was maintained at room temperature and then reacted for 18 hr, thus obtaining a polyamic acid solution having a solid content of 20 wt% and a viscosity of 148 poise. The subsequent procedures were performed in the same manner as in Example 1, thereby manufacturing a polyimide film having a thickness of 19 **µ**m.

### Comparative Example 3

While a 500 ml reactor equipped with a stirrer, a nitrogen injector, a dropping funnel, a temperature controller and a condenser was purged with nitrogen, 380.998 g of dimethylacetamide (DMAc) was placed in the reactor, and 45.299 g (0.13 mol) of FDA was then dissolved therein. Thereafter, 15.299 g (0.052 mol) of BPDA was added, the reaction was carried out for 5 hr, and 34.652 g (0.078 mol) of 6FDA was added. The resulting solution was maintained at room temperature and then reacted for 18 hr, thus obtaining a polyamic acid solution having a solid content of 20 wt% and a viscosity of 357 poise. The subsequent procedures were performed in the same manner as in Example 1, thereby manufacturing a polyimide film having a thickness of 17 **µ**m.

### Comparative Example 4

While a 500 ml reactor equipped with a stirrer, a nitrogen injector, a dropping funnel, a temperature controller and a condenser was purged with nitrogen, 396.601 g of dimethylacetamide (DMAc) was placed in the reactor, and 45.299 g (0.13 mol) of FDA was then dissolved therein. Thereafter, 7.650 g (0.026 mol) of BPDA was added, the reaction was carried out for 5 hr, and 46.202 g (0.104 mol) of 6FDA was added. The resulting solution was maintained at room temperature and then reacted for 18 hr, thus obtaining a polyamic acid solution having a solid content of 20 wt% and a viscosity of 320 poise. The subsequent procedures were performed in the same manner as in Example 1, thereby manufacturing a polyimide film having a thickness of 14 **µ**m.

### Comparative Example 5

While a 500 ml reactor equipped with a stirrer, a nitrogen injector, a dropping funnel, a temperature controller and a condenser was purged with nitrogen, 394.502 g of dimethylacetamide (DMAc) was placed in the reactor, and 44.832 g (0.14 mol) of TFDB was then dissolved therein. Thereafter, 16.476 g (0.056 mol) of BPDA was added, the reaction was carried out for 5 hr, and 37.317 g (0.084 mol) of 6FDA was added. The resulting solution was maintained at room temperature and then reacted for 18 hr, thus obtaining a polyamic acid solution having a solid content of 17 wt% and a viscosity of 480 poise. The subsequent procedures were performed in the same manner as in Example 1, thereby manufacturing a polyimide film having a thickness of 14 **µ**m.

### Comparative Example 6

While a 500 ml reactor equipped with a stirrer, a nitrogen injector, a dropping funnel, a temperature controller and a condenser was purged with nitrogen, 396.616 g of dimethylacetamide (DMAc) was placed in the reactor, and 43.231 g (0.135 mol) of TFDB was then dissolved therein. Thereafter, 7.944 g (0.027 mol) of BPDA was added, the reaction was carried out for 5 hr, and 47.979 g (0.108 mol) of 6FDA was added. The resulting solution was maintained at room temperature and then reacted for 18 hr, thus obtaining a polyamic acid solution having a solid content of 17 wt% and a viscosity of 352 poise. The subsequent procedures were performed in the same manner as in Example 1, thereby manufacturing a polyimide film having a thickness of 20 **µ**m.

The properties of the polyimide films of the examples and comparative examples were measured through the following methods. The results are shown in Tables 1 and 2 below.

### <Measurement>

(1) Average transmittance: the transmittance of the film of each of the examples was measured three times at 550 nm using a UV spectrophotometer (CM-3700d, made by Konica Minolta) and averaged (average transmittance).
(2) Yellow Index (Y.I.): the Y.I. of each film was measured at 380 to 780 nm according to ASTM E313 using a UV spectrophotometer (CM-3700d, made by Konica Minolta).
(3) Coefficient of Thermal Expansion (CTE): the coefficient of linear thermal expansion of each film was measured two times at 50 to 250°C using TMA (Q400, made by TA Instrument) through a TMA method. The size of the sample was 4 mm x 24 mm, the load was 0.02 N, and the heating rate was 10°C/min. Since residual stress might have remained in the thermally treated film, residual stress was completely removed upon the first run, after which the second value was taken as the actual measurement value.
(4) Birefringence: three measurements were performed at 532 nm in each of TE (Transverse Electric) mode and TM (Transverse Magnetic) mode using a prism coupler (Sairon SPA4000), and the average value thereof was determined.

**[Table 1]**

| No. | Composition | Molar ratio | Film thickness (**µ**m) | 550 nm Transmittance (%) | Y.I. | CTE (ppm/°C) |
|---|---|---|---|---|---|---|
| Ex.1 | FFDA / BPDA : 6FDA | 1 / 0.4 : 0.6 | 12 | 88.21 | 1.54 | 51.55 |
| Ex.2 | FFDA / BPDA : 6FDA | 1 / 0.3 : 0.7 | 10 | 89.51 | 1.12 | 53.94 |
| Ex.3 | FFDA / BPDA : 6FDA | 1 / 0.2 : 0.8 | 12 | 89.81 | 1.23 | 53.82 |
| Ex.4 | FFDA / BPDA : 6FDA | 1 / 0.1 : 0.9 | 15 | 90.12 | 0.98 | 56.20 |
| C.Ex.1 | FFDA / BPDA | 1 / 1 | 12 | 88.19 | 1.39 | 42.01 |
| C.Ex.2 | FFDA / 6FDA | 1 / 1 | 19 | 89.79 | 1.09 | 62.22 |
| C.Ex.3 | FDA / BPDA : 6FDA | 1 / 0.4 : 0.6 | 17 | 88.13 | 4.21 | 51.90 |
| C.Ex.4 | FDA / BPDA : 6FDA | 1 / 0.2 : 0.8 | 14 | 89.1 | 3.22 | 52.37 |
| C.Ex.5 | TFDB / BPDA : 6FDA | 1 / 0.4 : 0.6 | 14 | 90.34 | 2.1 | 62.25 |
| C.Ex.6 | TFDB / BPDA : 6FDA | 1 / 0.2 : 0.8 | 20 | 90.46 | 1.89 | 68.42 |

**[Table 2]**

| No. | Prism Coupler | | |
|---|---|---|---|
| | TE (Transverse Electric) mode | TM (Transverse Magnetic) mode | Birefringence |
| Ex.1 | 1.6908 | 1.6846 | 0.0062 |
| Ex.2 | 1.6930 | 1.6879 | 0.0051 |
| Ex.3 | 1.6910 | 1.6857 | 0.0053 |
| Ex.4 | 1.6898 | 1.6856 | 0.0042 |
| C.Ex.1 | 1.6860 | 1.6605 | 0.0255 |
| C.Ex.2 | 1.6090 | 1.6014 | 0.0076 |
| C.Ex.3 | 1.6244 | 1.6158 | 0.0086 |
| C.Ex.4 | 1.6241 | 1.6194 | 0.0047 |
| C.Ex.5 | 1.5978 | 1.5865 | 0.0113 |
| C.Ex.6 | 1.5758 | 1.5654 | 0.0104 |

As is apparent from Tables 1 and 2, the polyimide films of Examples 1 to 4 were colorless and transparent, as in the films of Comparative Examples 1 and 2, and had lower birefringence. In particular, when compared with Comparative Example 2, the films of the examples were improved 10% or more in heat resistance, represented by CTE. As the molar fraction of BPDA relative to 6FDA increases, heat resistance may increase but birefringence of the above compositions may deteriorate. Hence, the molar fraction of 6FDA preferably falls in the range of 0.4 to less than 1.0 relative to the total molar amount of the anhydride.

### Industrial Applicability

The present invention pertains to polyamic acid, and a polyimide resin and a colorless transparent polyimide film, prepared therefrom, which are suitable for use in an image display device and can be utilized as a protective layer or a substrate for a display.

## Claims

1. A polyamic acid, which is a polymerized product of a diamine and a dianhydride,
wherein the diamine comprises 9,9-bis(3-fluoro-4-aminophenyl)fluorene (FFDA), and
the dianhydride comprises 2-bis(3,4-dicarboxyphenyl)hexafluoropropane dianhydride (6FDA) and 3,3',4,4'-biphenyltetracarboxylic dianhydride (BPDA).

2. The polyamic acid of claim 1, wherein the 2-bis(3,4-dicarboxyphenyl)hexafluoropropane dianhydride (6FDA) is contained in a molar fraction ranging from 0.4 to less than 1.0 based on a total molar amount of the dianhydride.

3. A polyimide resin, comprising:
a first block, represented by Chemical Formula 1 below and formed by polymerizing 9,9-bis(3-fluoro-4-aminophenyl)fluorene (FFDA) and 2-bis(3,4-dicarboxyphenyl)hexafluoropropane dianhydride (6FDA); and
a second block, represented by Chemical Formula 2 below and formed by polymerizing 9,9-bis(3-fluoro-4-aminophenyl)fluorene (FFDA) and 3,3',4,4'-biphenyltetracarboxylic dianhydride (BPDA): 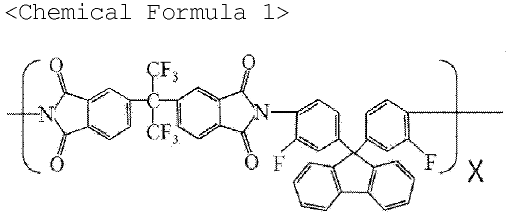 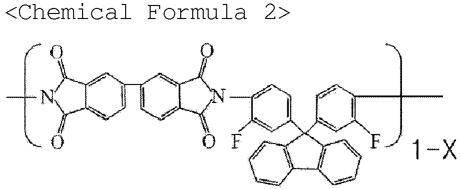 in Chemical Formulas 1 and 2, X is a molar fraction in a range of 0.4 < X < 1.0.

4. The polyimide resin of claim 3, wherein the polyimide resin has a coefficient of linear thermal expansion (CTE) of 60 ppm/°C or less, measured two times at 50 to 250°C using a TMA method.

5. A polyimide film, comprising:
a first block, represented by Chemical Formula 1 below and formed by polymerizing 9,9-bis(3-fluoro-4-aminophenyl)fluorene (FFDA) and 2-bis(3,4-dicarboxyphenyl)hexafluoropropane dianhydride (6FDA); and
a second block, represented by Chemical Formula 2 below and formed by polymerizing 9,9-bis(3-fluoro-4-aminophenyl)fluorene (FFDA) and 3,3',4,4'-biphenyltetracarboxylic dianhydride (BPDA): 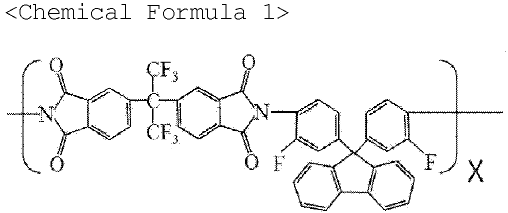 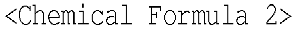 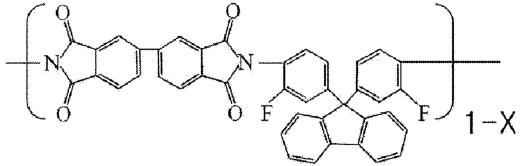 in Chemical Formulas 1 and 2, X is a molar fraction in a range of 0.4 < X < 1.0.

6. The polyimide film of claim 5, wherein the polyimide film has a yellow index of 2.0 or less at a film thickness of 10 to 20 **µ**m, and an average light transmittance of 88% or more at 550 nm.

7. The polyimide film of claim 5, wherein the polyimide film has a coefficient of linear thermal expansion (CTE) of 60 ppm/°C or less, measured two times at 50 to 250°C using a TMA method.

8. The polyimide film of claim 5, wherein the polyimide film has a birefringence (Δn) of 0.01 or less, the birefringence being defined by TE (Transverse Electric) - TM (Transverse Magnetic).

9. An image display device, comprising the polyimide film of any one of claims 5 to 8.

## Patentansprüche

1. Polyaminsäure, die ein polymerisiertes Produkt eines Diamins und eines Dianhydrids ist,
wobei das Diamin 9,9-Bis(3-fluor-4-aminophenyl)fluoren (FFDA) umfasst und
das Dianhydrid 2-Bis(3,4-dicarboxyphenyl)hexafluorpropandianhydrid (6FDA) und 3,3',4,4'-Biphenyltetracarbonsäuredianhydrid (BPDA) umfasst.

2. Polyaminsäure nach Anspruch 1, wobei das 2-Bis(3,4-dicarboxyphenyl)hexafluorpropandianhydrid (6FDA) in einer Molfraktion im Bereich von 0,4 bis weniger als 1,0, auf eine gesamte molare Menge des Dianhydrids bezogen, enthalten ist.

3. Polyimidharz, umfassend:
einen ersten Block, der durch die chemische Formel 1 unten dargestellt ist und durch Polymerisieren von 9,9-Bis(3-fluor-4-aminophenyl)fluoren (FFDA) und 2-Bis(3,4-dicarboxyphenyl)hexafluorpropandianhydrid (6FDA) gebildet wird; und
einen zweiten Block, der durch die chemische Formel 2 unten dargestellt ist und durch Polymerisieren von 9,9-Bis(3-fluor-4-aminophenyl)fluoren (FFDA) und 3,3',4,4'- Biphenyltetracarbonsäuredianhydrid (BPDA) gebildet wird; 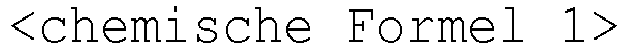 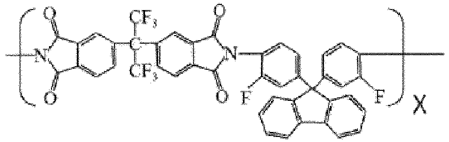 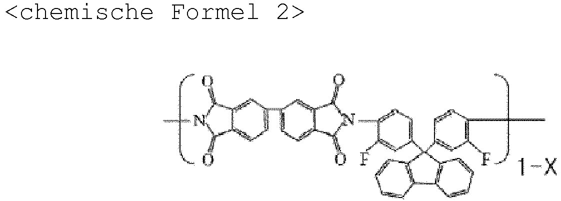 in den chemischen Formeln 1 und 2 X eine molare Fraktion in einem Bereich von 0,4 < X < 1,0 ist.

4. Polyimidharz nach Anspruch 3, wobei das Polyimidharz einen linearen Wärmeaustauschkoeffizienten (CTE) von 60 ppm/°C oder weniger, zweimal bei 50 bis 250 °C unter Anwendung eines TMA-Verfahrens gemessen, aufweist.

5. Polyimidfilm, umfassend:
einen ersten Block, der durch die chemische Formel 1 unten dargestellt ist und durch Polymerisieren von 9,9-Bis(3-fluor-4-aminophenyl)fluoren (FFDA) und 2-Bis(3,4-dicarboxyphenyl)hexafluorpropandianhydrid (6FDA) gebildet wird; und
einen zweiten Block, der durch die chemische Formel 2 unten dargestellt ist und durch Polymerisieren von 9,9-Bis(3-fluor-4-aminophenyl)fluoren (FFDA) und 3,3',4,4'- Biphenyltetracarbonsäuredianhydrid (BPDA)gebildet wird; 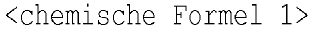 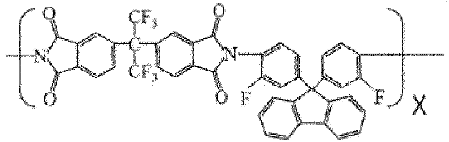 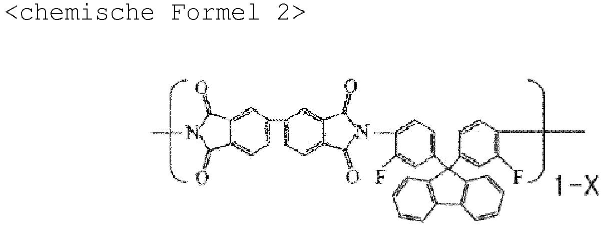 in den chemischen Formeln 1 und 2 X eine molare Fraktion in einem Bereich von 0,4 < X < 1,0 ist.

6. Polyimidfilm nach Anspruch 5, wobei der Polyimidfilm einen Gelbindex von 2,0 oder weniger bei einer Foliendicke von 10 bis 20 µm und eine durchschnittliche Lichtdurchlässigkeit von 88 % oder mehr bei 550 nm aufweist.

7. Polyimidfilm nach Anspruch 5, wobei der Polyimidfilm einen linearen Wärmeaustauschkoeffizienten (CTE) von 60 ppm/°C oder weniger, zweimal bei 50 bis 250 °C unter Anwendung eines TMA-Verfahrens gemessen, aufweist.

8. Polyimidfilm nach Anspruch 5, wobei der Polyimidfilm eine Doppelbrechung (Δn) von 0,01 oder weniger aufweist, wobei die Doppelbrechung durch TE (transversal elektrisch) - TM (transversal magnetisch) definiert wird.

9. Bildanzeigevorrichtung umfassend den Polyimidfilm nach irgendeinem der Ansprüche 5 bis 8.

## Revendications

1. Un acide polyamique, qui est un produit polymérisé d'une diamine et d'un dianhydride,
dans lequel la diamine comprend le 9,9-bis(3-fluoro-4-aminophényl)fluorène (FFDA), et
le dianhydride comprend le dianhydride de 2-bis(3,4-dicarboxyphényl)-hexafluoropropane (6FDA) et le dianhydride 3,3',4,4'-biphényltétracarboxylique (BPDA).

2. L'acide polyamique selon la revendication 1, dans lequel le dianhydride de 2-bis (3,4-dicarboxyphényl)hexafluoropropane (6FDA) est contenu dans une fraction molaire comprise entre 0,4 et moins de 1,0 sur la base d'une quantité molaire totale du dianhydride.

3. Une résine de polyimide, comprenant:
un premier bloc, représenté par la formule chimique 1 ci-dessous et formé en polymérisant du 9,9-bis(3-fluoro-4-aminophényl)fluorène (FFDA) et du dianhydride de 2-bis(3,4-dicarboxyphényl)hexafluoropropane (6FDA); et
un second bloc, représenté par la formule chimique 2 ci-dessous et formé en polymérisant du 9,9-bis (3-fluoro-4-aminophényl)fluorène (FFDA) et du dianhydride 3,3',4,4'-biphényltétracarboxylique (BPDA): 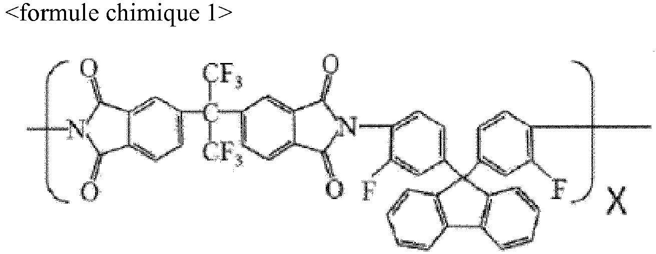 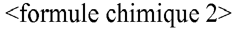 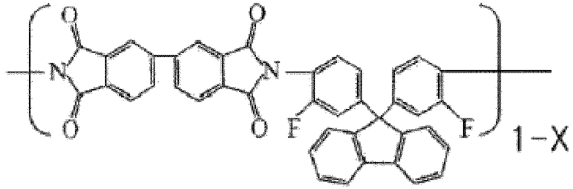 dans les formules chimiques 1 et 2, X est une fraction molaire dans une plage de 0,4 < X < 1,0.

4. La résine de polyimide selon la revendication 3, dans laquelle la résine de polyimide a un coefficient de dilatation thermique linéaire (CTE) de 60 ppm/°C ou moins, mesuré deux fois à de 50 à 250°C en utilisant un procédé TMA.

5. Un film de polyimide comprenant:
un premier bloc, représentée par la formule chimique 1 ci-dessous et formée par polymérisation de 9,9-bis(3-fluoro-4-aminophényl)fluorène (FFDA) et de dianhydride de 2-bis(3,4-dicarboxyphényl)hexafluoropropane (6FDA); et
un second bloc, représenté par la formule chimique 2 ci-dessous et formé en polymérisant du 9,9-bis(3-fluoro-4-aminophényl)fluorène (FFDA) et du dianhydride 3,3',4,4'-biphényltétracarboxylique (BPDA): 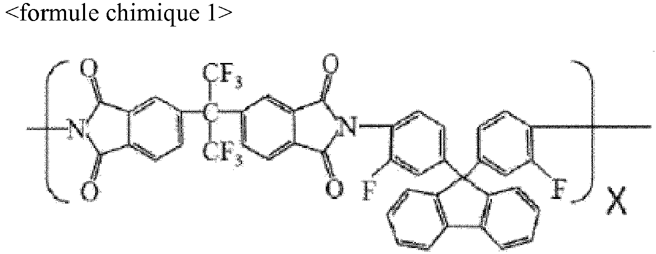 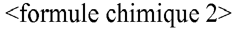 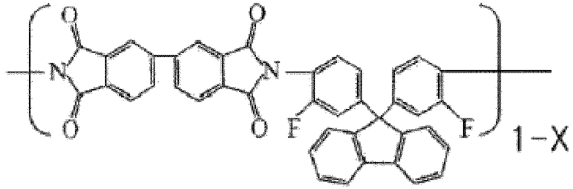 dans les formules chimiques 1 et 2, X est une fraction molaire dans une plage de 0,4 < X < 1,0.

6. Le film de polyimide selon la revendication 5, dans lequel le film de polyimide a un indice de jaune de 2,0 ou moins pour une épaisseur de film de 10 à 20 µm et une transmittance lumineuse moyenne de 88% ou plus à 550 nm.

7. Le film de polyimide selon la revendication 5, dans lequel le film de polyimide a un coefficient de dilatation thermique linéaire (CTE) de 60 ppm/°C ou moins, mesuré deux fois à 50 à 250° C en utilisant un procédé TMA.

8. Le film polyimide selon la revendication 5, dans lequel le film de polyimide a une biréfringence (Δn) de 0,01 ou moins, la biréfringence étant définie par TE (transverse électrique) - TM (transverse magnétique).

9. Un dispositif d'affichage d'image, comprenant le film de polyimide selon l'une quelconque des revendications 5 à 8.
